# EUROPEAN PATENT SPECIFICATION

(11) **EP 3 733 258 B1**
(45) Date of publication and mention of the grant of the patent: **15.11.2023**
(21) Application number: 20172389.7
(22) Date of filing: 30.04.2020
(51) Int. Cl.: B01D 29/58, B01D 35/147, B01D 35/157, B01D 35/30

(54) **FILTER ASSEMBLY CAPABLE OF ADJUSTING ELIMINATION OF SOLID MATERIALS USING FLOW-VARIABLE BYPASS FLOW PATH**
FILTERANORDNUNG, DIE ZUR BESEITIGUNG VON FESTSTOFFEN UNTER VERWENDUNG EINES STRÖMUNGSVARIABLEN BYPASS-STRÖMUNGSWEGS FÄHIG IST
ENSEMBLE FILTRE POUVANT AJUSTER L'ÉLIMINATION DE MATIÈRES SOLIDES À L'AIDE D'UN TRAJET D'ÉCOULEMENT DE DÉRIVATION À VARIABLE DE FLUX

(30) Priority: 03.05.2019 KR 20190052178
(43) Date of publication of application: 04.11.2020
(73) Proprietor: Microfilter Co., Ltd., Chungcheongbuk-do 27856 (KR)
(72) Inventor: LEE, Hyun Woo, 36977 Gyeongsangbuk-do (KR); CHO, Dae Yeon, 28363 Chungcheongbuk-do (KR); CHAE, Bo Kyoung, 05060 Seoul (KR); KIM, Dong Hyun, 12734 Gyeonggi-do (KR)
(74) Representative: Sander, Rolf

(56) References cited:
- EP-A1- 3 069 771
- CN-B- 106 039 807
- US-A1- 2016 271 535
- US-A1- 2017 056 797

## Description

### CROSS-REFERENCE TO RELATED APPLICATION

This application claims priority to and the benefit of Korean Patent Application No. 2019-0052178, filed on May 3, 2019, the disclosure of which is incorporated herein by reference in its entirety.

### BACKGROUND

### 1. Field of the Invention

The present invention relates to a filter assembly capable of adjusting elimination of solid materials using a flow-variable bypass flow path, and more particularly, a filter assembly in which a flow-variable bypass flow path is formed in a filter head so as to adjust a percentage of solid materials such as calcium (Ca) ions, magnesium (Mg) ions, and the like included in original water.

### 2. Discussion of Related Art

Recently, as environmental pollution (or contamination), particularly, water pollution (or contamination) has become a social issue, use of purifiers which physically or chemically filters impurities from water has increased.

Such purifiers each include a variety of filters such as a precipitation filter, a carbon filter, a membrane filter, and the like connected and installed therein such that water undergoes a physical or chemical process while passing through such filters to be purified.

Here, a precipitation filter performs a function of primarily filtering out impurities such as sand, heavy metals, and the like included in a fluid (water). A pre-carbon filter performs a function of adsorbing and removing a chlorine (Cl) chemical, trihalomethane, and organic chemicals, and the like dissolved in a fluid. A membrane filter is an essential filter of a purifier and performs a function of ultimately filtering foreign substances including heavy metals, viruses, bacterium, organic chemicals, and the like using a reverse osmosis method through an ultraprecision semipermeable membrane.

Also, a structure of a general filter includes an inlet into which water is injected and an outlet through which the water is discharged in a head of the filter such that a connecting tube is coupled to each of the inlet and the outlet and water supplied from a water source is purified and supplied to a water tank of the purifier.

Meanwhile, in the case of a reverse osmosis membrane filter, water purification is performed by artificially applying a pressure to a thick side such that water that is a solvent in a thick solution passes through an osmosis membrane and moves toward a weak side.

Although such a reverse osmosis membrane filter is capable of eliminating ionic materials such as calcium (Ca) ions and magnesium (Mg) ions which cause forming of scale, a high-pressure environmental condition is necessary for reverse osmosis, a carbon-pretreatment filter is necessary for preventing a membrane from being damaged by Cl, and it is difficult to satisfy customers due to an amount of purified water in comparison to that of original water.

To solve such problems, a filter assembly according to a related art includes a solid material elimination means in a filter housing which accommodates a filter body. However, a structure of the filter housing becomes complicated and the number of additional components increases such that manufacturing processes and manufacturing costs increase.

Also, recently, customers who would like to adjust contents of solid materials such as metal ions including Ca ions, Mg ions, and the like in purified water rather than to completely eliminate such solid materials from original water have increased. However, although the filter assembly according to the related art is capable of eliminating such solid materials using the solid material elimination means, it is impossible to adjust contents thereof.

To overcome such a limitation, attempts for adding an adjusting means to the solid material elimination means installed in the filter housing have been made. However, it is difficult to perform installation due to a complicated internal structure of the filter housing, and manufacturing costs increase due to an increase in the number of components.

Accordingly, a technology related to a practical and applicable filter assembly capable of adjusting contents of solid materials while reducing manufacturing costs has been desperately needed.

### [Related Art Document]

### [Patent Document]

(Patent Document 0001) Korean Patent Publication No. 10-2010-0109156 (published on October 08, 2010)

EP3069771 (JOUNG WHIDONG [KR], et al) discloses a filter head installed on a water purification line in which water is purified by using a filter and a filter cartridge assembly detachably attached to the filter head. In the filter cartridge assembly, the filter cartridge is automatically detachable from the filter head by repeatedly pushing the filter cartridge in a vertical direction without any manipulation.

US2017056797 (KANG CHAN SUK [KR], et al) discloses a flow path could be changed to the bypass flow path or the purified water flow path, when the inner moves upwardly and downwardly in the filter head by combining or separating of the filter body and filter head.

US2016271535 (DONG JOUNG WHI [KR], et al) discloses a filter assembly in which an uneven portion is formed on an inner wall of a hollow external housing and a filter fastening unit which includes a pressurized section pressurized by the uneven portion is formed around an inner cap which moves up and down along an inner surface of the external housing to firmly fasten a filter.

### SUMMARY OF THE INVENTION

The present invention is directed to providing a filter assembly capable of adjusting a content of solid materials such as Ca ions, Mg ions, and the like included in original water by forming a flow-variable bypass flow path in a filter cartridge header and additionally forming a flow path directly passing through a Cl elimination filter without passing a solid material elimination filter corresponding to the bypass flow path in addition to a flow path basically configured to sequentially pass through a solid material elimination filter and the Cl elimination filter in a filter portion.

One aspect of the present invention provides a filter assembly capable of
adjusting elimination of solid materials using a flow-variable bypass flow path. The filter assembly includes filter portion (100) which includes a cover portion (110)
formed on top to have a shape in which a bypass flow pipe (112) and a water discharge pipe (113) sequentially surrounds a perimeter of a vertically protruding original water inflow pipe (111) in a stepped structure and accommodates a filter body therein and a filter cartridge header (200) in which the cover portion (110) of the filter portion (100) is accommodated therebelow and which includes a bypass flow rate control unit (300) capable of adjusting an inflow amount of original water flowing into the bypass flow pipe (112).

The filter cartridge header (200) may include an upper header (201) which includes a hollow portion forming an inlet portion (210) and an outlet portion (220) in one side and the other side and passes through an inside, a lower header (202) which includes one or more bypass inlet holes (202a) formed as inflow paths of the original water flowing into the bypass flow pipe (112) on a periphery of a central hole (203) coupled to a bottom of the upper header (201) to pass therethrough, and the bypass flow rate control unit (300) in which an inflow amount of the original water flowing into the bypass flow pipe (112) is adjusted stage by stage by adjusting an opening range of the bypass inlet holes (202a) by operating a rotational opening or closing dial (320) coupled in a structure sequentially passing through the upper header (201) and the lower header (202) and formed to be exposed in a lid shape outside a top end.

The bypass flow rate control unit (300) adjusts an amount of original water flowing into the one or more bypass inlet holes (202a) formed inside the lower header (202) by controlling a rotational radius of the rotational opening or closing dial (320).

The bypass flow rate control unit (300) may include a flow rate adjusting housing (310) which has a top end passing through the upper header (201) and a bottom end located in a place at which the bypass inlet holes (202a) of the lower header are formed, a rotational opening or closing dial (320) disposed above the upper header (201) and coupled to the top end of the flow rate adjusting housing (310), and a housing supporting spring (330) formed on a periphery of an outer surface of the flow rate adjusting housing (310) and having a repulsive force against inner surfaces of the upper header (201) and the lower header (202).

The flow rate adjusting housing (310) may include communication holes (311a, 311b) formed on a side surface to communicate with the inlet portion (210) formed in the upper header (201) to allow original water to flow therein, a housing blocking member (312) formed on a bottom end surface and capable of preventing the bypass inlet holes (202a) formed in the lower header (202) stage by stage corresponding to a rotational operation of the opening or closing dial (320), and a rotation power transfer portion (313) formed at a top end to receive rotational movement of the opening or closing dial (320).

To couple the upper (201) to the lower header (202), the filter assembly may include a coupling hole portion (201a) formed on an outer surface of a bottom end of the upper header (201) and a coupling protruding portion (202b) formed to protrude from a side surface of the lower header (202).

The upper header (202) may include a pair of stoppers (232) formed on an edge of a top surface to perform a holding operation at a uniform interval corresponding to an inner surface of the opening or closing dial (320) and a header-center pipe (231) which is formed to vertically protrude from a central part of the top surface and to form a power transfer space therein for the opening or closing dial (320) and the flow rate adjusting housing (310) and includes a holding protrusion (233a) and a holding step (233b) corresponding to a push operation and a pull operation of the opening or closing dial (320).

The opening or closing dial (320) may include a grip cover (322) which has a lid-shaped exterior and in which a plurality of stopper-corresponding grooves are formed along an inner surface to perform the holding operation of the stoppers (232) and grip slits are formed at certain intervals on an outer surface, an insertion portion (321) formed in a vertically downward direction at a central part of an inside of the grip cover (322) to have a tubular shape and inserted into and fixed to the rotation power transfer portion (313) of the flow rate adjusting housing (310), a holding hook (323), corresponding to the holding protrusion (233a) and the holding step (233b) formed on the header-center pipe (231) of the upper header (201), fixed to the holding protrusion (233a) when the push operation is performed and held by the holding step (233b) and prevented from being externally separated when the pull operation is performed, and a rotation prevention member (324) vertically disposed between the holding hook (323) and the grip cover (322) to come into contact with and prevent the stoppers (232) from rotating in the push operation.

The filter portion (100) may include a Cl elimination filter (130) on top and a solid material elimination filter (140) on bottom.

The filter portion (100) may include a first flow path formed such that original water flowing through the original water inflow pipe (111) sequentially passes through the solid material elimination filter (140) and the Cl elimination filter (130) and a second flow path formed such that the original water flowing through the bypass flow pipe (112) directly passes through the Cl elimination filter (130) without passing the solid material elimination filter (140).

When the inflow amount of the original water flowing into the bypass flow pipe (112) is adjusted using the bypass flow rate control unit (300), a flow rate ratio between the first flow path and the second flow path may be adjusted so as to adjust Ca and Mg contents.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view illustrating external components of a filter assembly capable of adjusting elimination of solid materials using a flow-variable bypass flow path according to an embodiment of the present invention;
FIGS. 2A and 2B are views schematically illustrating an upper structure in a filter portion included in the filter assembly shown in FIG. 1;
FIGS. 3 to 6 are views illustrating a coupling structure of a filter cartridge header included in the filter assembly shown in FIG. 1 in detail;
FIG. 7 is a view schematically illustrating an inside of the filter portion included in the filter assembly shown in FIG. 1;
FIG. 8 is a view illustrating a bypass flow path formed in a filter assembly capable of adjusting elimination of solid materials using a flow-variable bypass flow path according to an embodiment; and
FIG. 9 is a view schematically illustrating an operation of controlling a flow rate of the bypass flow path according to the embodiment of the present invention.

### DETAILED DESCRIPTION OF EXEMPLARY EMBODIMENTS

Since a following description of the present invention merely corresponds to embodiments for describing a structure and functions of the present invention, the scope of the present invention should not be construed as being restricted by the embodiments described below. That is, since a variety of changes and a variety of shapes of the embodiments may be made, it should be understood that the scope of the present invention includes equivalents capable of implementing the technical concept thereof.

Meanwhile, the meaning of the terms described herein should be understood as follows.

The terms "first," "second," and the like are intended to distinguish one component from another component, and the scope of the present invention should not be limited to the terms. For example, a first component may be designated as a second component, and similarly, the second component may be designated as the first component.

When it is stated that one component is "connected" to another component, it should be understood that the one component may be directly connected to the other component but another component may be present therebetween. On the other hand, when it is stated that one component is "directly connected" to another component, it should be understood that no other component is present therebetween. Meanwhile, other expressions for describing a relationship between components, that is, "between," "directly between," "adjacent to," "directly adjacent to," and the like should also be equally construed.

It should be understood that singular expressions, unless clearly defined otherwise in the text, include plural expressions. Also, it should be understood that the terms "comprise," "have," or the like are used herein to specify the presence of stated features, numbers, stages, operations, elements, components or combinations thereof but do not preclude the presence or addition of one or more other features, numbers, stages, operations, elements, components, or combinations thereof.

Identification codes (for example, a, b, c, and the like) in stages are used for convenience of description and do not describe an order of components. Also, the stages may be performed unlike a specified order unless a particular order is clearly defined in the text. That is, the stages may be performed equal to the specified order, be performed substantially at the same time, or be performed in a reverse order.

All the terms used herein, unless defined otherwise, have the same meanings generally understood by one of ordinary skill in the art. Generally, terms defined in generally used dictionaries should be construed as having the meanings which coincide with contextual meanings in the art and cannot be construed as having ideal or excessively formal meanings unless clearly defined herein.

Hereinafter, the embodiments of the present invention will be described in detail with reference to the attached drawings.

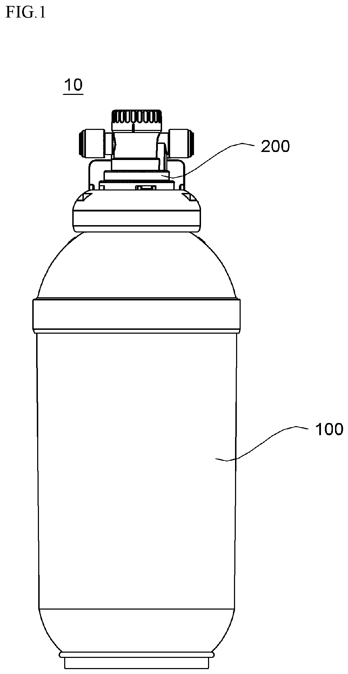

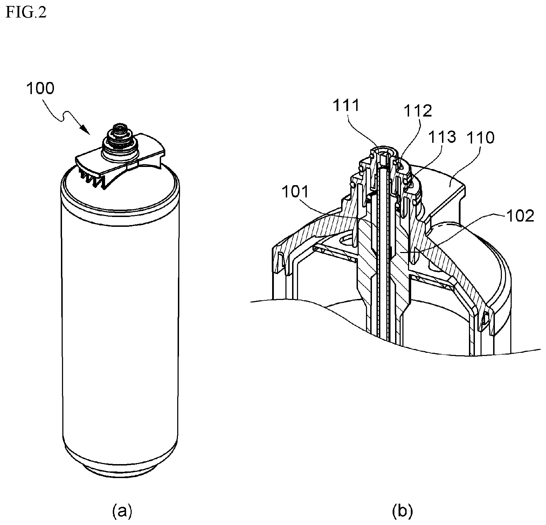

FIG. 1 is a view illustrating external components of a filter assembly capable of adjusting elimination of solid materials using a flow-variable bypass flow path according to an embodiment of the present invention, and FIGS. 2A and 2B are views schematically illustrating an upper structure in a filter portion included in the filter assembly shown in FIG. 1.

As shown in the drawings, a filter assembly 10 capable of adjusting elimination of solid materials using a flow-variable bypass flow path according to the embodiment may include a filter portion 100 and a filter cartridge header 200.

In more detail, the filter portion 100 may include a cover portion 110 on top which has a shape in which a bypass flow pipe 112 and a water discharge pipe 113 sequentially surrounds a vertically protruding original water inflow pipe 111 in a stepped structure and may accommodate a filter body therein.

In the embodiment of the present invention, the filter body may be formed while a region, in which a filter configured to eliminate solid materials such as calcium (Ca) and magnesium (Mg) dissolved in original water is located, and a region, in which a filter configured to eliminate chlorine (Cl) dissolved in original water is located, are distinguished from each other.

Also, the filter cartridge header 200 may include a filter accommodation pipe on bottom, in which a cover portion 110 of the filter portion 100 is accommodated, and a bypass flow rate control unit 300 capable of adjusting a flow rate of original water which flows into the bypass flow pipe 112.

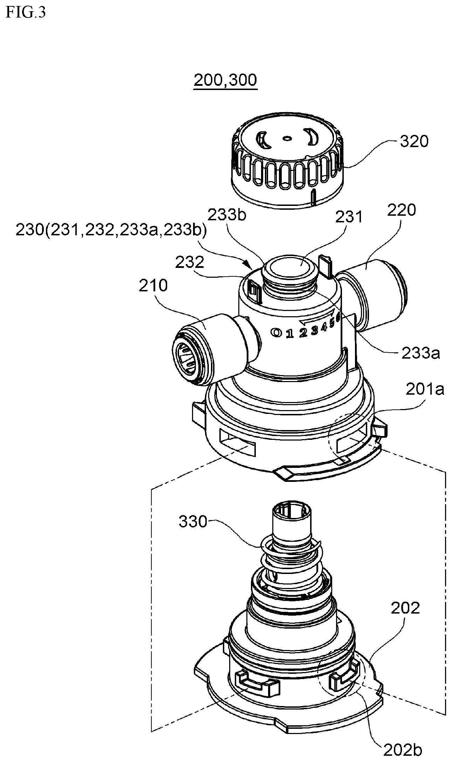

Next, the bypass flow rate control unit 300 included in the filter assembly according to the embodiment of the present invention will be described as follows with reference to FIGS. 3 to 6.

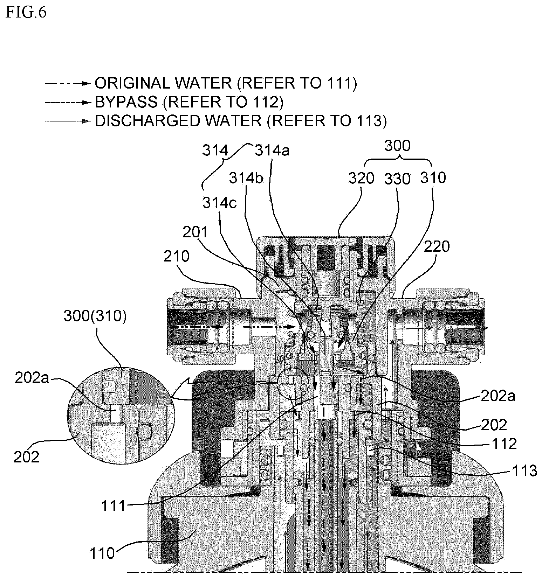

FIGS. 3 to 5 are views illustrating a coupling structure of the filter cartridge header included in the filter assembly shown in FIG. 1 in detail, and FIG. 6 is a cross-sectional view illustrating a coupling structure between the filter cartridge header and the filter portion.

As shown in the drawings, the filter cartridge header 200 included in the filter assembly according to the embodiment of the present invention may include an upper header 201, a lower header 202, and the bypass flow rate control unit 300.

In more detail, the upper header 201 may include a hollow part which forms an inlet portion 210 and an outlet portion 220 on one side and the other side and passes through an inside.

Here, the inlet portion 210 may be a component which includes an inlet formed on one side and forms an original water inflow path for supplying original water to the original water inflow pipe 111

Also, the outlet portion 220 may include an outlet formed on the other side facing the inlet of the inlet portion 210 and include a water discharge path which communicates with the water discharge pipe 113 so as to discharge water which passes through the filter body and is purified.

Also, the lower header 202 may include at least one bypass inlet hole 202a formed as an inflow path of original water flowing into the bypass flow pipe 112 on a periphery of a central hole 203 coupled to a bottom of the upper header 201 and passing through an inside.

Also, in the bypass flow rate control unit 300, an opening range of the inlet hole 202a may be adjusted by operating a rotational opening or closing dial 320 coupled in a structure which sequentially passes through the upper header 201 and the lower header 202 and formed to be exposed as a lid shape outside a top end so as to adjust an inflow rate of original water flowing into the bypass flow pipe 112 stage by stage.

Here, the bypass flow rate control unit 300 may adjust an amount of original water flowing into one or more bypass inlet holes 202a formed inside the lower header 202 by controlling a rotational radius of the rotational opening or closing dial 320.

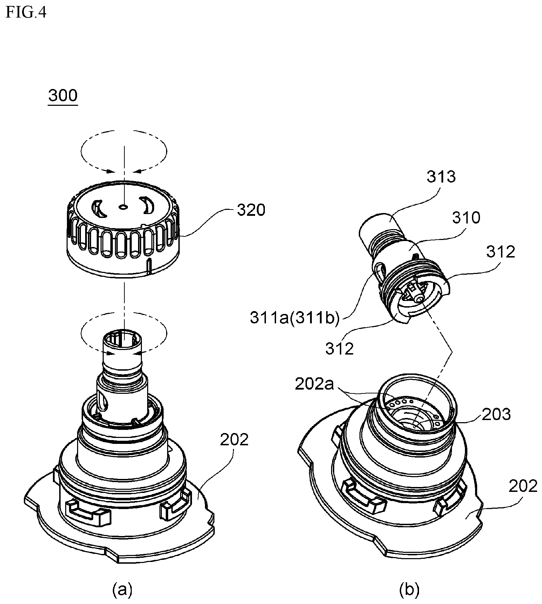

The bypass flow rate control unit 300 according to the embodiment of the present invention will be described as follows with reference to FIGS. 3 and 4.

As shown in the drawings, in the embodiment of the present invention, the bypass flow rate control unit 300 may include a flow rate adjusting housing 310, the rotational opening or closing dial 320, and a housing supporting spring 330.

In more detail, the flow rate adjusting housing 310 may include a top end passing through the upper header 201 and a bottom end located at a place at which the bypass inlet hole 202a is formed.

Also, the rotational opening or closing dial 320 may be coupled to the top end of the flow rate adjusting housing 310 while being disposed above the upper header 201.

Also, the housing supporting spring 330 may be formed on a perimeter of an outer surface of the flow rate adjusting housing 310 and perform as an additional spring so as to improve a sealing force of the bypass inlet hole.

Meanwhile, as shown in the drawings, according to the embodiment of the present invention, to couple the upper header 201 with the lower header 202, a coupling hole portion 201a formed in an outer surface of a bottom end of the upper header 201 and a coupling protruding portion 202b formed to protrude from a side surface of the lower header 202 may be included.

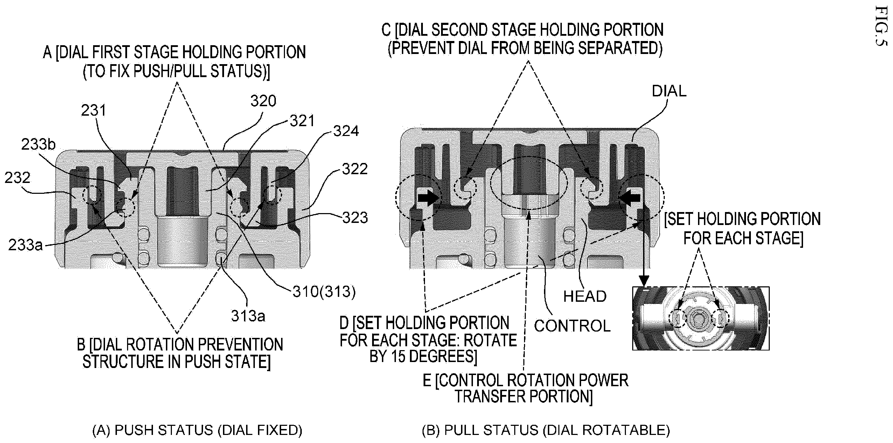

A coupling structure of the flow rate adjusting housing and the opening or closing dial according to the embodiment of the present invention will be described as follows with reference to FIGS. 5 and 6.

As shown in the drawings, according to the embodiment of the present invention, the flow rate adjusting housing 310 included in the bypass flow rate control unit 300 is formed as a cylindrical housing with a sidewall surface, which vertically partitions a whole into top and bottom, formed in at a center, and includes a fastening device 314 which forms a flow path for an original water inflow below the sidewall surface and is fastened to the original water inflow pipe 111 of the filter portion 100 with a watertight structure.

Here, as shown in the drawings, the fastening device 314 may include a header spring 314a configured to automatically cut off original water when the filter portion 100 is separated from the filter cartridge header 200, a fastening shaft 314b having a sealed O-ring at an end and insertion-fastened to the original water inflow pipe 111, and a fastening collar 314c configured to tighten and fix a perimeter of the fastening shaft 314b inside a bottom end not to prevent original water from leaking.

Also, the flow rate adjusting housing 310 may include communication holes 311a and 311b, a housing blocking member 312, and a rotation power transfer portion 313.

In more detail, the communication holes 311a and 311b may be formed in a side surface of the flow rate adjusting housing 310 to communicate with the inlet portion 210 formed at the upper header 201 such that original water flows thereinto.

Also, the housing blocking member 312 may be formed on a bottom end surface of the flow rate adjusting housing 310 to block the bypass inlet hole 202a formed in the lower header 202 stage by stage corresponding to a rotating operation of the opening or closing dial 320.

Also, the rotation power transfer portion 313 may be formed at the top end of the flow rate adjusting housing 310 and receive rotational movement of the opening or closing dial 320.

Next, before describing components of the opening or closing dial 320, referring to the drawings, the upper header 201 included in the filter cartridge header 200 according to the embodiment of the present invention may include a pair of stoppers 232 and a header-center pipe 231.

Here, the pair of stoppers 232 may be formed on an edge of an upper surface of the upper header 201 to perform a holding operation at a uniform interval corresponding to an inner surface of the opening or closing dial 320.

Also, the header-center pipe 231 may be formed to vertically protrude in a central part of the upper surface, form a power transfer space therein for the opening or closing dial 320 and the flow rate adjusting housing 310, and include a holding protrusion 233a and a holding step 233b corresponding to a push operation and a pull operation of the opening or closing dial 320 on an outer surface thereof.

In the embodiment of the present invention, as shown in the drawings, the opening or closing dial 320 may include a grip cover 322, an insertion portion 321, a holding hook 323, and a rotation prevention member 324.

In more detail, the grip cover 322 may have a lid-shaped exterior and include a plurality of stopper-corresponding grooves formed at certain interval along an inner surface to perform the holding operation of the stoppers 232 and grip slits formed at a certain interval on an outer surface.

Also, the insertion portion 321 may have a tubular shape in a central part of an inside of the grip cover 322, be formed in a vertically downward direction, and be inserted into and fixed to the rotation power transfer portion 313 of the flow rate adjusting housing 310.

Also, the holding hook 323 may be fixed to the holding protrusion 233a when the push operation is performed corresponding to the holding protrusion 233a and the holding step 233b formed on the header-center pipe 231 of the upper header 201 and be fixed to and may be held by the holding step 233b and prevented from externally separated when the pull operation is performed.

Also, the rotation prevention member 324 may be vertically disposed between the holding hook 323 and the grip cover 322 and come into contact with and prevent the stoppers 232 from rotating when the push operation is performed.

As described above, referring to FIG. 5 for reference numerals A and B, when the opening or closing dial 320 performs the push operation, the insertion portion 321 is inserted into the rotation power transfer portion 313 of the flow rate adjusting housing 310 such that the holding hook 323 may be fixed to the holding protrusion 233a formed on the header-center pipe 231 of the upper header 201 and the rotation prevention member 324 may come into contact with and prevent the stoppers 232 of the upper header 201 from rotating.

Also, referring to FIG. 5 for reference numeral C, while the opening or closing dial 320 performs a pull-up operation of releasing first a fixed state to adjust a flow rate of the bypass flow path, when the grip cover 322 is lifted while being gripped, the insertion portion 321 moves toward the rotation power transfer portion 313 of the flow rate adjusting housing 310 such that the holding hook 323 may be held by the holding step 233b formed on the header-center pipe 231 of the upper header 201.

Also, like reference numeral D, according to the embodiment of the present invention, to adjust of the flow rate of the bypass flow path, when the grip cover 322 of the opening or closing dial 320 is gripped and rotated, the stoppers 232 formed on the edge of the upper surface of the upper header 201 perform the holding operation at a uniform interval from the inner surface of the opening or closing dial 320 and rotate

Next, like reference numeral E, as rotational movement of the opening or closing dial 320 is transferred through the rotation power transfer portion 313 formed on the top end of the flow rate adjusting housing 310, the housing blocking member 312 formed on the bottom end surface of the flow rate adjusting housing 310 may block the bypass inlet hole 202a formed in the lower header 202 corresponding to a rotational operation of the opening or closing dial 320.

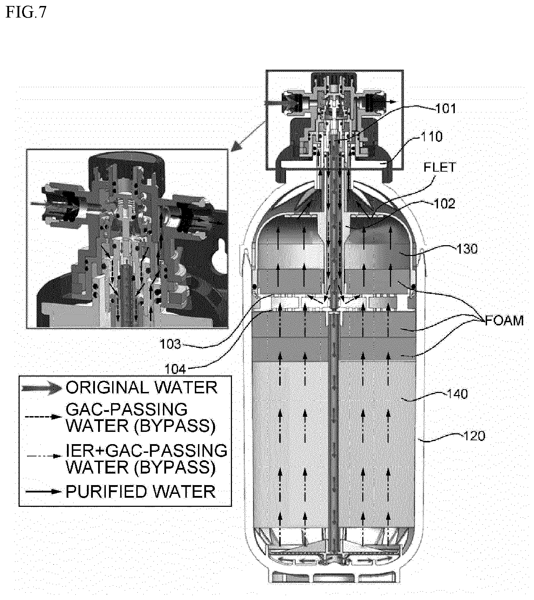

FIG. 7 is a view schematically illustrating an inside of the filter portion included in the filter assembly shown in FIG. 1.

As shown in FIG. 7, the filter portion 100 included in the filter assembly capable of adjusting elimination of solid materials using a flow-variable bypass flow path may include the cover portion 110 on top which has a shape in which the bypass flow pipe 112 and the water discharge pipe 113 sequentially surround the vertically protruding original water inflow pipe 111 in a stepped structure and may include a filter housing 120 on bottom which accommodates the filter body.

Here, as shown in the drawings, in the filter portion 100, interposing the bypass flow path communicating with the bypass flow pipe 112 therebetween, a Cl elimination filter 130 may be located on top inside the filter housing 120 and a solid material elimination filter 140 may be located on bottom inside the filter housing 120.

Also, as shown in the drawings, to form the bypass flow path, the filter portion 100 may include an original water inflow tube 101 communicating with the original water inflow pipe 111 and a flow path disc 102 which is located to allow the original water inflow tube 101 to vertically pass through a central part thereof and forms regions internally and externally communicating with the bypass flow pipe 112 and the water discharge pipe 113.

Here, for a watertight structure of the bypass flow path formed by the flow path disc 102, the filter portion 100 may include a circular upper disc 103 disposed on a perimeter of a bottom end of the flow path disc 102 and a circular lower disc 104 disposed on a perimeter of a bottom end of the original water inflow tub 101 and further include a main tube 105 coupled to a lower end of the original water inflow tube 101 and disposed to pass through the solid material elimination filter 140.

According to the embodiment of the present invention, since original water flowing through the original water inflow pipe 111 passes through the original water inflow tube 101 and the main tube 105, consequently, a first flow path sequentially passing through the solid material elimination filter 140 and the Cl elimination filter 130 is basically formed. Since the original water flowing through the bypass flow pipe 112 passes only the Cl elimination filter 130 between the upper disc 103 and the lower disc 104 outside the original water inflow tube 102 due to the flow disc 102, a second flow path directly passing through the Cl elimination filter 130 without passing through the solid material elimination filter 140 may be additionally formed.

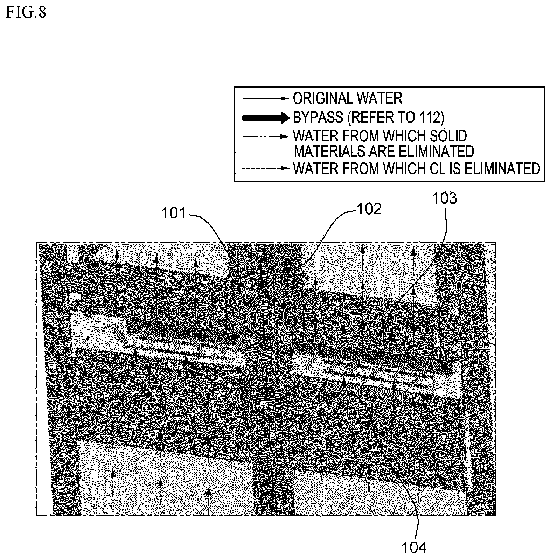

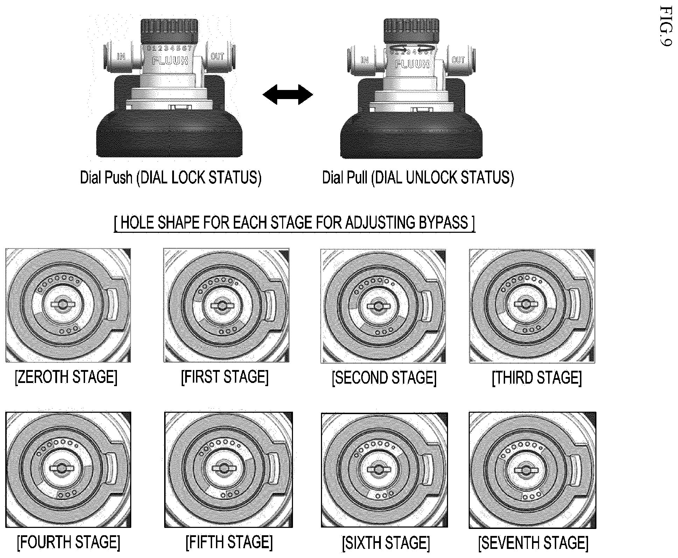

FIG. 8 is a view illustrating the bypass flow path formed in a filter assembly capable of adjusting elimination of solid materials using a flow-variable bypass flow path according to an embodiment, and FIG. 9 is a view schematically illustrating an operation of controlling the flow rate of the bypass flow path shown in FIG. 8.

As shown in the drawings, according to the embodiment of the present invention, the bypass flow rate control unit 300 included in the filter assembly capable of adjusting elimination of solid materials using a flow-variable bypass flow path may adjust an amount of original water flowing into one or more bypass inlet holes 202a formed in a bottom edge of an inner wall of the lower header 202 by controlling the rotational radius of the opening or closing dial 320 which has been described above.

In more detail, according to the embodiment of the present invention, although it is shown in the drawings that up to seven bypass inlet holes 202a in one side are shown and numbers of a variety of cases are shown while being distinguished into 0 to 7 levels according to the number of the sealed bypass inlet holes 202a, the present invention is not limited thereto and a variety of numbers of the bypass inlet holes 202a may be formed.

Here, the flow rate adjusting housing 310 may include the housing blocking member 312, at a certain part of a perimeter of a bottom end surface, which is capable of sealing the inlet holes 202a within a particular range among the one or more bypass inlet holes 202a. In the embodiment of the present invention, the housing blocking member 312 may seal different numbers of the bypass inlet holes 202a in respective stages.

Also, as described above, since the original water flowing through the original water inflow pipe 111 may basically form the first flow path sequentially passing through the solid material elimination filter 140 and the Cl elimination filter 130 and additionally form the second flow path directly passing through the Cl elimination filter 130 without passing the solid material elimination filter 140, when an inflow amount of the original water flowing into the bypass flow pipe 112 is adjusted using the bypass flow rate control unit 300, a flow rate ratio between the first flow path and the second flow path may be adjusted so as to adjust Ca and Mg contents.

As described above, according to the present invention, there is present an effect of providing a filter assembly capable of adjusting a content of solid materials such as Ca ions, Mg ions, and the like included in original water by forming a flow-variable bypass flow path in a filter cartridge header and additionally forming a flow path directly passing through a Cl elimination filter without passing a solid material elimination filter corresponding to the bypass flow path in addition to a flow path basically configured to sequentially pass through a solid material elimination filter and the Cl elimination filter in a filter portion.

Also, according to the present invention, since it is possible to assemble a filter cartridge header using an upper header and a lower header, an effect of easily maintaining and repairing a product may be provided.

Also, according to the present invention, since an inflow amount of original water flowing into a bypass flow path is easily adjusted using an opening or closing dial exposed above a filter cartridge header, an effect of increasing user convenience may be provided.

Also, according to the present invention, since it is possible to implement a push-pull type opening or closing dial in a filter cartridge header and to prevent the opening or closing dial from being separated in operation time and from being rotated when not in operation, an effect of fundamentally preventing any possible malfunction in use.

As described above, according to the present invention, there is present an effect of providing a filter assembly capable of adjusting a content of solid materials such as Ca ions, Mg ions, and the like included in original water by forming a flow-variable bypass flow path in a filter cartridge header and additionally forming a flow path directly passing through a Cl elimination filter without passing a solid material elimination filter corresponding to the bypass flow path in addition to a flow path basically configured to sequentially pass through a solid material elimination filter and the Cl elimination filter in a filter portion.

Also, according to the present invention, since it is possible to assemble a filter cartridge header using an upper header and a lower header, an effect of easily maintaining and repairing a product may be provided.

Also, according to the present invention, since an inflow amount of original water flowing into a bypass flow path is easily adjusted using an opening or closing dial exposed above a filter cartridge header, an effect of increasing user convenience may be provided.

Also, according to the present invention, since it is possible to implement a push-pull type opening or closing dial in a filter cartridge header and to prevent the opening or closing dial from being separated in operation time and from being rotated when not in operation, an effect of fundamentally preventing any possible malfunction in use.

Although the embodiments of the present invention have been described above in detail, the above-described embodiments are merely examples and the present invention is not limited thereto. It will be understood that equivalently substitutable modifications made without departing from the technical concept or filed of the present invention are included in the scope of the present invention as defined in the appended claims.

## Claims

1. A filter assembly capable of adjusting elimination of solid materials using a flow-variable bypass flow path, the filter assembly comprising:
a filter portion (100); and
a filter cartridge header (200); **characterized in that**:
the filter portion (100) comprises a cover portion (110) formed on top tohave a shape in which a bypass flow pipe (112) and a water discharge pipe (113) sequentially surrounds a perimeter of a vertically protruding original water inflow pipe (111) in a stepped structure and accommodates a filter body therein,
wherein the cover portion (110) of the filter portion (100) is accommodated below the filter cartridge header (200) and the filter cartridge header (200) comprises a bypass flow rate control unit (300) capable of adjusting an inflow amount of original water flowing into the bypass flow pipe (112).

2. The filter assembly of claim 1, wherein the filter cartridge header (200) comprises:
an upper header (201) which comprises a hollow portion forming an inlet portion (210) and an outlet portion (220) in one side and the other side and passes through an inside;
a lower header (202) which comprises one or more bypass inlet holes (202a) formed as inflow paths of the original water flowing into the bypass flow pipe (112) on a periphery of a central hole (203) coupled to a bottom of the upper header (201) to pass therethrough; and
the bypass flow rate control unit (300) in which an inflow amount of the original water flowing into the bypass flow pipe (112) is adjusted stage by stage by adjusting an opening range of the bypass inlet holes (202a) by operating a rotational opening or closing dial (320) coupled in a structure sequentially passing through the upper header (201) and the lower header (202) and formed to be exposed in a lid shape outside a top end.

3. The filter assembly of claim 2, wherein the bypass flow rate control unit (300) adjusts an amount of original water flowing into the one or more bypass inlet holes (202a) formed inside the lower header (202) by controlling a rotational radius of the rotational opening or closing dial (320).

4. The filter assembly of claim 3, wherein the bypass flow rate control unit (300) comprises:
a flow rate adjusting housing (310) which has a top end passing through the upper header (201) and a bottom end located in a place at which the bypass inlet holes (202a) of the lower header are formed;
a rotational opening or closing dial (320) disposed above the upper header (201) and coupled to the top end of the flow rate adjusting housing (310); and
a housing supporting spring (330) formed on a periphery of an outer surface of the flow rate adjusting housing (310) and having a repulsive force against inner surfaces of the upper header (201) and the lower header (202).

5. The filter assembly of claim 4, wherein the flow rate adjusting housing (310) comprises:
communication holes (311a, 311b) formed on a side surface to communicate with the inlet portion (210) formed in the upper header (201) to allow original water to flow therein;
a housing blocking member (312) formed on a bottom end surface and capable of preventing the bypass inlet holes (202a) formed in the lower header (202) stage by stage corresponding to a rotational operation of the opening or closing dial (320); and
a rotation power transfer portion (313) formed at a top end to receive rotational movement of the rotational opening or closing dial (320).

6. The filter assembly of claim 5, to couple the upper header (201) to the lower header (202), comprising:
a coupling hole portion (201a) formed on an outer surface of a bottom end of the upper header (201); and
a coupling protruding portion (202b) formed to protrude from a side surface of the lower header (202).

7. The filter assembly of claim 6, wherein the upper header (202) comprises:
a pair of stoppers (232) formed on an edge of a top surface to perform a holding operation at a uniform interval corresponding to an inner surface of the opening or closing dial (320); and
a header-center pipe (231) which is formed to vertically protrude from a central part of the top surface and to form a power transfer space therein for the opening or closing dial (320) and the flow rate adjusting housing (310) and comprises a holding protrusion (233a) and a holding step (233b) corresponding to a push operation and a pull operation of the opening or closing dial (320).

8. The filter assembly of claim 7, wherein the opening or closing dial (320) comprises:
a grip cover (322) which has a lid-shaped exterior and in which a plurality of stopper-corresponding grooves are formed along an inner surface to perform the holding operation of the stoppers (232) and grip slits are formed at certain intervals on an outer surface;
an insertion portion (321) formed in a vertically downward direction at a central part of an inside of the grip cover (322) to have a tubular shape and inserted into and fixed to the rotation power transfer portion (313) of the flow rate adjusting housing (310);
a holding hook (323), corresponding to the holding protrusion (233a) and the holding step (233b) formed on the header-center pipe (231) of the upper header (201), fixed to the holding protrusion (233a) when the push operation is performed and held by the holding step (233b) and prevented from being externally separated when the pull operation is performed; and
a rotation prevention member (324) vertically disposed between the holding hook (323) and the grip cover (322) to come into contact with and prevent the stoppers (232) from rotating in the push operation.

9. The filter assembly of claim 1, wherein the filter portion (100) comprises a Cl elimination filter (130) on top and a solid material elimination filter (140) on bottom.

10. The filter assembly of claim 9, wherein the filter portion (100) comprises a first flow path formed such that original water flowing through the original water inflow pipe (111) sequentially passes through the solid material elimination filter (140) and the Cl elimination filter (130) and a second flow path formed such that the original water flowing through the bypass flow pipe (112) directly passes through the Cl elimination filter (130) without passing the solid material elimination filter (140).

11. The filter assembly of claim 10, wherein when the inflow amount of the original water flowing into the bypass flow pipe (112) is adjusted using the bypass flow rate control unit (300), a flow rate ratio between the first flow path and the second flow path is adjusted so as to adjust Ca and Mg contents.

## Patentansprüche

1. Filteranordnung, die in der Lage ist, die Beseitigung von Feststoffen durch Verwenden eines durchflussvariablen Bypass-Strömungsweges einzustellen, wobei die Filteranordnung umfasst:
einen Filterabschnitt (100); und
einen Filterpatronensammler (200); **dadurch gekennzeichnet, dass**:
der Filterabschnitt (100) einen Abdeckabschnitt (110) umfasst, der an der Oberseite ausgebildet ist, um eine Form aufzuweisen, in der ein Bypass-Durchflussrohr (112) und ein Wasserabflussrohr (113) nacheinander einen Umfang eines vertikal vorstehenden Zuflussrohrs (111) für Ursprungswasser in einer gestuften Struktur umgeben und einen Filterkörper darin aufnehmen,
wobei der Abdeckabschnitt (110) des Filterabschnitts (100) unterhalb des Filterpatronensammlers (200) aufgenommen wird und der Filterpatronensammler (200) eine Steuereinheit (300) für Bypass-Durchflussmengen umfasst, die in der Lage ist, eine Zuflussmenge von Ursprungswasser einzustellen, das in das Bypass-Durchflussrohr (112) fließt.

2. Filteranordnung nach Anspruch 1, wobei der Filterpatronensammler (200) umfasst:
einen oberen Sammler (201), der einen hohlen Abschnitt umfasst, der einen Einlassabschnitt (210) und einen Auslassabschnitt (220) auf der einen Seite und der anderen Seite bildet und durch einen Innenraum führt;
einen unteren Sammler (202), der ein oder mehrere Bypass-Einlasslöcher (202a) umfasst, die als Zuflusswege des Ursprungswassers ausgebildet sind, das in das Bypass-Durchflussrohr (112) an einem Umfang eines zentralen Lochs (203) fließt, das mit einem Boden des oberen Sammlers (201) verbunden ist, um durch diesen hindurchzugehen; und
die Steuereinheit (300) für Bypass-Durchflussmengen, in der eine Zuflussmenge des Ursprungswassers, das in das Bypass-Durchflussrohr (112) fließt, stufenweise eingestellt wird, indem ein Öffnungsbereich der Bypass-Einlasslöcher (202a) eingestellt wird, indem ein drehbarer Öffnungs- oder Schließwählknopf (320) betätigt wird, der in einer Struktur verbunden ist, die sequentiell durch den oberen Sammler (201) und den unteren Sammler (202) verläuft und ausgebildet ist, um in einer Deckelform außerhalb eines oberen Endes freizuliegen.

3. Filteranordnung nach Anspruch 2, wobei die Steuereinheit (300) für Bypass-Durchflussmengen eine Menge an Ursprungswasser durch Steuern eines drehbaren Radius des Öffnungs- oder Schließwählknopfs (320) einstellt, das in das eine oder die mehreren Bypass-Einlasslöcher (202a) fließt, die im Inneren des unteren Sammlers (202) ausgebildet sind.

4. Filteranordnung nach Anspruch 3, wobei die Steuereinheit (300) für Bypass-Durchflussmengen umfasst:
ein Gehäuse (310) zum Einstellen der Durchflussmenge, das ein oberes Ende hat, das durch den oberen Sammler (201) hindurchgeht, und ein unteres Ende, das sich an einer Stelle befindet, an der die Bypass-Einlasslöcher (202a) des unteren Sammlers ausgebildet sind;
einen drehbaren Öffnungs- oder Schließwählknopf (320), der oberhalb des oberen Sammlers (201) angeordnet und mit dem oberen Ende des Gehäuses (310) zum Einstellen der Durchflussmenge verbunden ist; und
eine Gehäusestützfeder (330), die an einem Umfang einer Außenfläche des Gehäuses (310) zum Einstellen der Durchflussmenge ausgebildet ist und eine Rückstoßkraft gegen Innenflächen des oberen Sammlers (201) und des unteren Sammlers (202) ausübt.

5. Filteranordnung nach Anspruch 4, wobei das Gehäuse (310) zum Einstellen der Durchflussmenge umfasst:
Verbindungslöcher (311a, 311b), die auf einer Seitenfläche ausgebildet sind, um mit dem Einlassabschnitt (210) in Verbindung zu stehen, der in dem oberen Sammler (201) ausgebildet ist, um Ursprungswasser zu ermöglichen, darin zu fließen;
ein Gehäusesperrelement (312), das an einer unteren Endfläche ausgebildet ist und in der Lage ist, die Bypass-Einlasslöcher (202a) stufenweise entsprechend einem Drehvorgang des Öffnungs- oder Schließwählknopfs (320) zu verhindern, die in dem unteren Sammler (202) ausgebildet sind; und
einen Drehkraftübertragungsabschnitt (313), der an einem oberen Ende ausgebildet ist, um eine Drehbewegung des drehbaren Öffnungs- oder Schließwählknopfs (320) aufzunehmen.

6. Filteranordnung nach Anspruch 5, um den oberen Sammler (201) mit dem unteren Sammler (202) zu verbinden, umfassend:
einen Verbindungslochabschnitt (201a), der an einer Außenfläche eines unteren Endes des oberen Sammlers (201) ausgebildet ist; und
einen vorstehenden Verbindungsabschnitt (202b), der ausgebildet ist, um von einer Seitenfläche des unteren Sammlers (202) vorzustehen.

7. Filteranordnung nach Anspruch 6, wobei der obere Sammler (202) umfasst:
ein Paar Anschläge (232), die an einer Kante einer oberen Fläche ausgebildet sind, um einen Haltevorgang in einem gleichmäßigen Abstand durchzuführen, der einer Innenfläche des Öffnungs- oder Schließwählknopfs (320) entspricht; und
ein Sammler-Mittelrohr (231), das ausgebildet ist, um von einem mittleren Teil der oberen Fläche vertikal vorzustehen und darin einen Kraftübertragungsraum für den Öffnungs- oder Schließwählknopf (320) und das Gehäuse (310) zum Einstellen der Durchflussmenge zu bilden, und einen Haltevorsprung (233a) und eine Haltestufe (233b) umfasst, die einem Druckvorgang und einem Zugvorgang des Öffnungs- oder Schließwählknopfs (320) entsprechen.

8. Filteranordnung nach Anspruch 7, wobei der Öffnungs- oder Schließwählknopf (320) umfasst:
eine Griffabdeckung (322), die eine deckelförmige Außenseite hat und in der eine Vielzahl von mit einem Anschlag korrespondierenden Nuten entlang einer Innenfläche ausgebildet sind, um den Haltevorgang der Anschläge (232) durchzuführen, und Griffschlitze in bestimmten Abständen an einer Außenfläche ausgebildet sind;
einen Einführabschnitt (321), der in einer vertikalen Abwärtsrichtung an einem mittleren Teil einer Innenseite der Griffabdeckung (322) ausgebildet ist, um eine röhrenförmige Form aufzuweisen, und in den Drehkraftübertragungsabschnitt (313) des Gehäuses (310) zum Einstellen der Durchflussmenge eingefügt und daran befestigt ist;
einen Haltehaken (323), der dem Haltevorsprung (233a) und der Haltestufe (233b) entspricht, die an dem Sammler-Mittelrohr (231) des oberen Sammlers (201) ausgebildet sind, an dem Haltevorsprung (233a) befestigt ist, wenn der Druckvorgang durchgeführt wird, und durch die Haltestufe (233b) gehalten wird und daran gehindert wird, von außen getrennt zu werden, wenn der Zugvorgang durchgeführt wird; und
ein Drehverhinderungselement (324), das vertikal zwischen dem Haltehaken (323) und der Griffabdeckung (322) angeordnet ist, um mit den Anschlägen (232) in Kontakt zu kommen und sie daran zu hindern, sich bei dem Druckvorgang zu drehen.

9. Filteranordnung nach Anspruch 1, wobei der Filterabschnitt (100) oben ein Cl-Beseitigungsfilter (130) und unten ein Feststoff-Beseitigungsfilter (140) umfasst.

10. Filteranordnung nach Anspruch 9, wobei der Filterabschnitt (100) einen ersten Strömungsweg, der so ausgebildet ist, dass das Ursprungswasser, das durch das Zuflussrohr (111) des Ursprungswassers fließt, nacheinander durch das Feststoff-Beseitigungsfilter (140) und das Cl-Beseitigungsfilter (130) fließt, und einen zweiten Strömungsweg umfasst, der so ausgebildet ist, dass das Ursprungswasser, das durch das Bypass-Durchflussrohr (112) fließt, direkt durch das Cl-Beseitigungsfilter (130) fließt, ohne das Feststoff-Beseitigungsfilter (140) zu passieren.

11. Filteranordnung nach Anspruch 10, wobei, wenn die Zuflussmenge des Ursprungswassers, das in das Bypass-Durchflussrohr (112) fließt, unter Verwendung der Steuereinheit (300) für Bypass-Durchflussmengen eingestellt wird, ein Durchflussratenverhältnis zwischen dem ersten Strömungsweg und dem zweiten Strömungsweg eingestellt wird, um Ca- und Mg-Gehalte einzustellen.

## Revendications

1. Ensemble filtre capable d'ajuster l'élimination de matières solides à l'aide d'un trajet d'écoulement de dérivation à flux variable, l'ensemble filtre comprenant :
une partie filtre (100) ; et
un collecteur de cartouche filtrante (200) ; **caractérisé en ce que** :
la partie filtre (100) comprend une partie couvercle (110) formée sur le dessus pour avoir une forme dans laquelle un tuyau d'écoulement de dérivation (112) et un tuyau d'évacuation d'eau (113) entourent séquentiellement un périmètre d'un tuyau d'admission d'eau d'origine en saillie verticalement (111) dans une structure en palier et reçoit un corps de filtre à l'intérieur de celle-ci,
dans lequel la partie couvercle (110) de la partie filtre (100) est reçue sous le collecteur de cartouche filtrante (200) et le collecteur de cartouche filtrante (200) comprend une unité de commande de débit de dérivation (300) capable d'ajuster une quantité d'admission d'eau d'origine s'écoulant dans le tuyau d'écoulement de dérivation (112).

2. Ensemble filtre selon la revendication 1, dans lequel le collecteur de cartouche filtrante (200) comprend :
un collecteur supérieur (201) qui comprend une partie creuse formant une partie d'entrée (210) et une partie de sortie (220) d'un côté et de l'autre côté et traverse un intérieur ;
un collecteur inférieur (202) qui comprend un ou plusieurs trous d'entrée de dérivation (202a) formés en tant que trajets d'admission de l'eau d'origine s'écoulant dans le tuyau d'écoulement de dérivation (112) sur une périphérie d'un trou central (203) couplé à un fond du collecteur supérieur (201) pour passer à travers celui-ci ; et
l'unité de commande de débit de dérivation (300) dans laquelle une quantité d'admission de l'eau d'origine s'écoulant dans le tuyau d'écoulement de dérivation (112) est ajustée niveau par niveau en ajustant une plage d'ouverture des trous d'entrée de dérivation (202a) en actionnant un cadran rotatif d'ouverture ou de fermeture (320) couplé dans une structure passant séquentiellement à travers le collecteur supérieur (201) et le collecteur inférieur (202) et formé pour être exposé sous une forme de couvercle à l'extérieur d'une extrémité supérieure.

3. Ensemble filtre selon la revendication 2, dans lequel l'unité de commande de débit de dérivation (300) ajuste une quantité d'eau d'origine s'écoulant dans l'un ou plusieurs trous d'entrée de dérivation (202a) formés à l'intérieur du collecteur inférieur (202) en commandant un rayon de rotation du cadran rotatif d'ouverture ou de fermeture (320).

4. Ensemble filtre selon la revendication 3, dans lequel l'unité de commande de débit de dérivation (300) comprend :
un boîtier de réglage de débit (310) qui comporte une extrémité supérieure passant à travers le collecteur supérieur (201) et une extrémité inférieure située à un endroit au niveau duquel les trous d'entrée de dérivation (202a) du collecteur inférieur sont formés ;
un cadran rotatif d'ouverture ou de fermeture (320) disposé au-dessus du collecteur supérieur (201) et couplé à l'extrémité supérieure du boîtier de réglage de débit (310) ; et
un ressort de support de boîtier (330) formé sur une périphérie d'une surface externe du boîtier de réglage de débit (310) et comportant une force répulsive contre les surfaces internes du collecteur supérieur (201) et du collecteur inférieur (202).

5. Ensemble de filtre selon la revendication 4, dans lequel le boîtier de réglage de débit (310) comprend :
des trous de communication (311a, 311b) formés sur une surface latérale pour communiquer avec la partie d'entrée (210) formée dans le collecteur supérieur (201) pour permettre à l'eau d'origine de s'écouler à l'intérieur ;
un élément de blocage de boîtier (312) formé sur une surface d'extrémité inférieure et capable de boucher les trous d'entrée de dérivation (202a) formés dans le collecteur inférieur (202) niveau par niveau en correspondance à une opération de rotation du cadran d'ouverture ou de fermeture (320) ; et
une partie de transfert de puissance de rotation (313) formée au niveau d'une extrémité supérieure pour recevoir le mouvement de rotation du cadran rotatif d'ouverture ou de fermeture (320).

6. Ensemble filtre selon la revendication 5, pour coupler le collecteur supérieur (201) au collecteur inférieur (202), comprenant :
une partie de trou de couplage (201a) formée sur une surface externe d'une extrémité inférieure du collecteur supérieur (201) ; et
une partie saillante de couplage (202b) formée pour faire saillie depuis une surface latérale du collecteur inférieur (202).

7. Ensemble filtre selon la revendication 6, dans lequel le collecteur supérieur (202) comprend :
une paire de butées (232) formées sur un bord d'une surface supérieure pour effectuer une opération de maintien à un intervalle uniforme correspondant à une surface interne du cadran d'ouverture ou de fermeture (320) ; et
un tuyau au centre du collecteur (231) qui est formé pour faire saillie verticalement à partir d'une partie centrale de la surface supérieure et pour former un espace de transfert de puissance à l'intérieur de celui-ci pour le cadran d'ouverture ou de fermeture (320) et le boîtier de réglage de débit (310) et comprend une saillie de maintien (233a) et un palier de maintien (233b) correspondant à une opération de poussée et une opération de traction du cadran d'ouverture ou de fermeture (320).

8. Ensemble filtre selon la revendication 7, dans lequel le cadran d'ouverture ou de fermeture (320) comprend :
un couvercle de poignée (322) qui comporte un extérieur en forme de bouchon et dans lequel une pluralité de rainures correspondant aux butées sont formées le long d'une surface intérieure pour effectuer l'opération de maintien des butées (232) et des fentes de préhension sont formées à des intervalles donnés sur une surface extérieure;
une partie d'insertion (321) formée dans une direction verticalement vers le bas au niveau d'une partie centrale de l'intérieur du couvercle de poignée (322) pour avoir une forme tubulaire et insérée dans et fixée à la partie de transfert de puissance de rotation (313) du boîtier de réglage du débit (310) ;
un crochet de maintien (323), correspondant à la saillie de maintien (233a) et au palier de maintien (233b) formé sur le tuyau au centre du collecteur (231) du collecteur supérieur (201), fixé à la saillie de maintien (233a) lorsque l'opération de poussée est effectuée et maintenu par le palier de maintien (233b) et empêché d'être séparée extérieurement lorsque l'opération de traction est effectuée ; et
un élément empêchant la rotation (324) disposé verticalement entre le crochet de maintien (323) et le couvercle de poignée (322) pour entrer en contact avec les butées (232) et les empêcher de tourner lors de l'opération de poussée.

9. Ensemble filtre selon la revendication 1, dans lequel la partie filtre (100) comprend un filtre d'élimination de Cl (130) en haut et un filtre d'élimination de matière solide (140) en bas.

10. Ensemble filtre selon la revendication 9, dans lequel la partie filtre (100) comprend un premier trajet d'écoulement formé de telle sorte que l'eau d'origine s'écoulant à travers le tuyau d'admission d'eau d'origine (111) passe séquentiellement à travers le filtre d'élimination de matière solide (140) et le filtre d'élimination de Cl (130) et un second trajet d'écoulement formé de telle sorte que l'eau d'origine s'écoulant à travers le tuyau d'écoulement de dérivation (112) passe directement à travers le filtre d'élimination de Cl (130) sans passer par le filtre d'élimination de matière solide (140).

11. Ensemble de filtre selon la revendication 10, dans lequel lorsque la quantité d'admission de l'eau d'origine s'écoulant dans le tuyau d'écoulement de dérivation (112) est ajustée à l'aide de l'unité de commande de débit de dérivation (300), un rapport de débit entre le premier trajet d'écoulement et le second trajet d'écoulement est ajusté de manière à ajuster les teneurs en Ca et en Mg.
